# EUROPEAN PATENT APPLICATION

(11) **EP 2 111 067 A1**
(43) Date of publication of application: **21.10.2009**
(21) Application number: 09005373.7
(22) Date of filing: 15.04.2009
(51) Int. Cl.: H04W 4/16

(54) **Method, system and server for shielding call forwarding function**

(30) Priority: 16.04.2008 CN 200810090471; 16.12.2008 WO PCT/CN2008/073519
(71) Applicant: Huawei Technologies Co., Ltd., Longgang District Shenzhen 518129 (CN)
(72) Inventor: Liang, Jing, Shenzhen Guangdong Province 518129 (CN); Tang, Hong, Shenzhen Guangdong Province 518129 (CN)
(74) Representative: Pfenning, Meinig & Partner GbR

(57) **Abstract**

A method for shielding a call forwarding function, including: obtaining subscriber information transmitted between a subscriber home network and a subscriber visited network; and analyzing the subscriber information, and sending, according to an analysis result, forwarding-information-shielded subscriber information to the subscriber visited network. With the embodiments of the present invention, when a subscriber roams to a visited network, there is no need to cancel the call forwarding function by a manual operation in advance. Instead, the call forwarding function is shielded automatically by the server in the network, thereby reducing roaming fees generated during the roaming process.

## Description

This application claims the priority of Chinese Patent Application No. 200810090471.0, filed on April 16, 2008 with the Chinese Patent Office and titled "Method, System and Server for Shielding Call Forwarding Function", and the priority of International Patent Application No. PCT/CN2008/073519 filed on December 16, 2008, and the contents of both are incorporated herein by reference in their entireties.

### Field of the Invention

The present invention relates to the field of communication technology, and in particularly to a method, system and server for shielding a call forwarding function.

### Background of the Invention

A call forwarding service refers to that: before a call from a calling terminal is connected, a called terminal allows forwarding the call to another terminal correspondingly set for the called number. Typically, a subscriber using the call forwarding service sets call forwarding conditions in advance. For example, when the cell phone of the called subscriber is busy, of no response, or out of service, the call is forwarded to a landline phone of the called subscriber, etc. Thus the call forwarding service can provide convenient call services for the subscriber. However, in the case that the mobile terminal held by the subscriber roams to a foreign country, if the above call forwarding service is still open, the call forwarding function is typically processed by the Visited Public Land Mobile Network (VPLMN) of the foreign country when the mobile terminal held by the subscriber acting as a called terminal. Then the VPLMN forwards the call to a terminal corresponding to a domestic forwarded-to number set by the subscriber beforehand, thus the above forwarding process lead to additional international call legs. The VPLMN charges the Home Public Land Mobile Network (HPLMN) where the called subscriber is located for roaming fees, and correspondingly the HPLMN charges the called subscriber for the roaming fees. As can be seen from the above case, when roaming to foreign countries, the subscriber typically desires to shield the call forwarding function set beforehand to avoid paying a large amount of international roaming fees resulted from implementing the call forwarding service.

During research to the prior art, the inventor has found that: in order to shield the call forwarding function, a subscriber can manually cancel the already-set call forwarding function through the menu provided in the mobile terminal held by the subscriber, or can go to a mobile operator to cancel the already-set call forwarding function with the help of the operator. As can be seen, all the approaches for canceling the call forwarding function need to be processed by the subscriber manually, thus the operation is inconvenient.

### Summary of the Invention

An object of the embodiments of the present invention is to provide a method, system and server for shielding a call forwarding function, so that call forwarding information can be shielded automatically by the server in the network during the roaming process of the subscriber.

To realize the object, the embodiments of the present invention provide the following technical solutions:

A method for shielding a call forwarding function, which includes:
obtaining subscriber information transmitted between a subscriber home network and a subscriber visited network; and
analyzing the subscriber information, and sending, according to an analysis result, forwarding-information-shielded subscriber information to the subscriber visited network.

A server, which includes:
an obtaining unit, adapted to obtain subscriber information transmitted between a subscriber home network and a subscriber visited network; and
a sending unit, adapted to analyze the subscriber information, and send, according to an analysis result, forwarding-information-shielded subscriber information to the subscriber visited network.

A system for shielding a call forwarding function, which includes the server, and further includes a subscriber home network and a subscriber visited network, wherein:
the subscriber home network is adapted to transmit subscriber information to the subscriber visited network; and
the subscriber visited network is adapted to receive the subscriber information sent by the server.

As can be seen from the above technical solutions provided by the embodiments of the present invention, the embodiments of the present invention obtain subscriber information transmitted between a subscriber home network and a subscriber visited network, and send, by analyzing the subscriber information and according to an analysis result, subscriber information not containing forwarding information to the subscriber visited network. With the embodiments of the present invention, when a subscriber roams to a visited network, there is no need to cancel the call forwarding function by a manual operation in advance. Instead, the call forwarding function is shielded automatically by the server in the network, thereby reducing roaming fees generated during the roaming process.

### Brief Description of the Drawings

Fig.1 is a flow chart of an embodiment of a method for shielding a call forwarding function according to the present invention;

Fig.2 is a diagram illustrating a networking structure for shielding a call forwarding function according to the present invention;

Fig.3 is a flow chart of another embodiment for shielding a call forwarding function according to the present invention;

Fig.4 is a diagram illustrating another networking structure for shielding a call forwarding function according to the present invention;

Fig.5 is a flow chart of yet another embodiment for shielding a call forwarding function according to the present invention;

Fig.6 is a block diagram of an embodiment of a system for shielding a call forwarding function according to the present invention;

Fig.7 is a block diagram of an embodiment of a server according to the present invention;

Fig.8 is a block diagram of another embodiment of the server according to the present invention; and

Fig.9 is a block diagram of yet another embodiment of the server according to the present invention.

### Detailed Description of the Embodiments

The embodiments of the present invention provide a method, system and server for shielding a call forwarding function by obtaining subscriber information transmitted between a subscriber home network and a subscriber visited network; and analyzing the subscriber information, and sending, according to an analysis result, subscriber information not containing forwarding information to the subscriber visited network.

In order to enable a skilled person in the art to better understand the technical solutions provided by the embodiments of the present invention, further detailed descriptions to the technical solutions provided by the embodiments of the present invention are given by referring to the appended drawings and the specific embodiments.

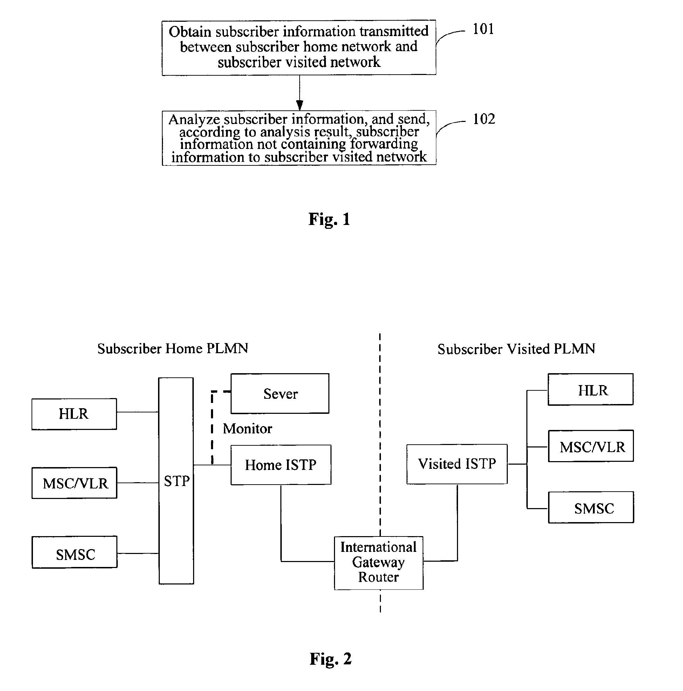

A flow of an embodiment of a method for shielding a call forwarding function according to the present invention is as illustrated in Fig.1:

Step 101: Obtain subscriber information transmitted between a subscriber home network and a subscriber visited network.

Specifically, the subscriber information can be obtained by monitoring a signaling message transmitted between the subscriber home network and the subscriber visited network; or the subscriber information can be obtained by forwarding a signaling message transmitted between the subscriber home network and the subscriber visited network.

Specifically, the subscriber information transmitted between the subscriber home network and the subscriber visited network is contained in a signaling message transmitted via an ISD signaling interface.

Step 102: Analyze the subscriber information, and send, according to an analysis result, subscriber information not containing forwarding information to the subscriber visited network.

Specifically, when obtaining the subscriber information by monitoring the signaling message, determine whether the subscriber information contains forwarding information, and send regenerated subscriber information not containing forwarding information to the subscriber visited network if forwarding information is contained in the subscriber information. When obtaining the subscriber information by forwarding the signaling message, determine whether the subscriber information contains forwarding information, and forward forwarding-information-deleted subscriber information to the subscriber visited network or forward regenerated subscriber information not containing forwarding information to the subscriber visited network if forwarding information is contained in the subscriber information.

Specifically, the subscriber information not containing forwarding information is contained in a signaling message transmitted via an ISD signaling interface, or in a signaling message transmitted via other MAP signaling interface, or in a signaling message transmitted via a self-defined internal interface.

A diagram illustrating a networking structure for shielding a call forwarding function according to the present invention is as illustrated in Fig.2. The subscriber home Public Land Mobile Network (PLMN) is a domestic network, including an internal Signaling Transfer Point (STP) and a Home Register (HLR) connected with the STP, a Mobile Switching Center/Visitor Location Register (MSC/VLR), an SMSC, and the STP is connected with an ISTP. The subscriber visited PLMN is a foreign network, including an ISTP and an HLR connected with the ISTP, an MSC/VLR and an SMSC. Specifically, the subscriber home ISTP and the subscriber visited ISTP is connected to each other via an international gateway router.

A server is arranged in the subscriber home PLMN. The server is adapted to monitor signaling of the international gateway office, i.e. to monitor signaling messages transmitted between the subscriber home PLMN and the subscriber visited PLMN. When the subscriber roams from the home PLMN to the visited PLMN, the subscriber visited MSC sends a location update message to the subscriber home HLR. The location update message is transmitted from the visited ISTP to the home ISTP via the international gateway router, and then transmitted from the home ISTP to the subscriber home HLR via the STP. Upon reception of the location update message, the subscriber home HLR sends subscriber information to the subscriber visited MSC according to the above-described transmission links of the location update message. By monitoring the above messages transmitted between the subscriber visited MSC and the subscriber home HLR, the server obtains the subscriber information contained therein, and determines whether the subscriber information contains forwarding information. If forwarding information is contained in the subscriber information, the server emulates the subscriber home HLR to send new subscriber information, which does not contain forwarding information, to the subscriber visited MSC. Upon reception of the subscriber information, the subscriber visited MSC automatically updates the subscriber information sent by the subscriber home HLR with such subscriber information, thereby realizing the shielding of the forwarding information of the subscriber.

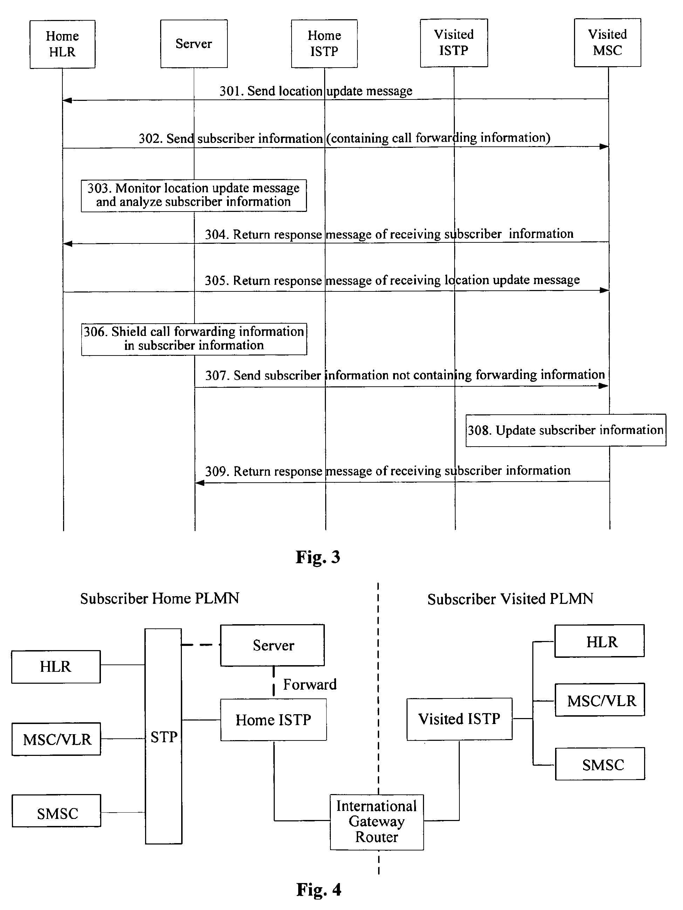

In combination with the above Fig.2 of the diagram illustrating the networking structure, reference is made to Fig.3 of a flow chart of another embodiment for shielding a call forwarding function according to the present invention. In this flow, it is assumed that the subscriber has set a call forwarding function beforehand, and has roamed to the visited PLMN:

Step 301: A location update message of the subscriber is transmitted to the home ISTP by the visited MSC via the visited ISTP, and finally transmitted to the home HLR.

Step 302: Upon reception of the location update message of the subscriber, the home HLR sends subscriber information to the visited MSC. According to the call forwarding function set beforehand, the subscriber information contains call forwarding information and is sent to the visited MSC by way of an ISD signaling message.

Step 303: The server monitors the location update message and the subscriber information transmitted between the home HLR and the visited MSC, obtains and analyzes the subscriber information, and determines that the subscriber information contains forwarding information.

Step 304: The visited MSC returns to the home HLR a response message of receiving the subscriber information.

Step 305: The home HLR returns to the visited MSC a response message of receiving the location update message.

Step 306: The server shields the call forwarding information in the obtained subscriber information, and generates new subscriber information not containing forwarding information.

Step 307: The server sends the subscriber information not containing forwarding information to the visited MSC. The subscriber information can be sent to the visited MSC through an ISD signaling message, or an MAP signaling message, or a self-defined internal interface signaling message.

Step 308: The visited MSC updates the subscriber information sent by the home HLR with the newly received subscriber information.

Step 309: The visited MSC returns to the server a response message of receiving the subscriber information.

A diagram illustrating another networking structure for shielding a call forwarding function according to the present invention is as illustrated in Fig.4. The subscriber home PLMN is a domestic network, the subscriber visited PLMN is a foreign network, and the subscriber home ISTP and the subscriber visited ISTP are connected to each other via an international gateway router. The network structures in the subscriber home PLMN and the subscriber visited PLMN are the same as illustrated in Fig.2, and are not described in detail repeatedly herein.

A server is arranged in the subscriber home PLMN. The server is adapted to forward signaling of the international gateway office, i.e. to forward signaling messages transmitted between the subscriber home PLMN and the subscriber visited PLMN. The home ISTP is still connected with the STP, thus acting as a backup link of the link for the server to forward signaling messages. When a fault occurs in the server, signaling messages transmitted between the subscriber home PLMN and the subscriber visited PLMN still can be transmitted by using the backup link, thereby ensuring that there is no influence on the existing network transmission. When the subscriber roams from the home PLMN to the visited PLMN, the subscriber visited MSC sends a location update message to the subscriber home HLR. The location update message is transmitted from the visited ISTP to the home ISTP via the international gateway router, and then transmitted from the home ISTP to the server, and then forwarded to the subscriber home HLR by the service server via the STP. Upon reception of the location update message, the subscriber home HLR sends subscriber information to the server via the STP. Before forwarding the subscriber information, the server determines whether the subscriber information contains forwarding information, and deletes the forwarding information if forwarding information is contained in the subscriber information, and then forwards the subscriber information to the visited MSC according to the above-described links.

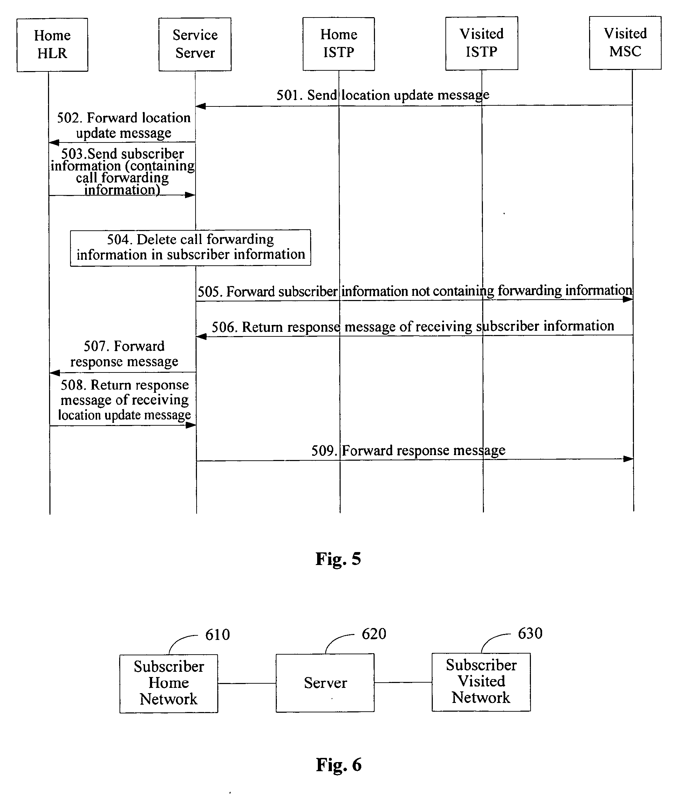

In combination with the above Fig.4 of the diagram illustrating the networking structure, reference is made to Fig.5 of a flow chart of yet another embodiment for shielding a call forwarding function according to the present invention. In this flow, it is also assumed that the subscriber has set a call forwarding function beforehand, and has roamed to the visited PLMN.

Step 501: A location update message of the subscriber is transmitted to the home ISTP by the visited MSC via the visited ISTP, and finally transmitted to the server.

Step 502: The server forwards the location update message to the home HLR.

Step 503: Upon reception of the location update message of the subscriber, the home HLR sends subscriber information, which is to be sent to the visited MSC, to the server. According to the call forwarding function set beforehand, the subscriber information contains call forwarding information.

Step 504: The server analyzes the subscriber information, and deletes the forwarding information in the subscriber information if it is determined that forwarding information is contained in the subscriber information.

It should be noted that: the server may also not process the subscriber information if it is determined that subscriber information contains forwarding information, but regenerate subscriber information not containing forwarding information.

Step 505: The server sends the subscriber information not containing forwarding information to the visited MSC.

Step 506: The visited MSC returns to the server a response message of receiving the subscriber information.

Step 507: The server forwards the response message to the home HLR.

Step 508: The home HLR returns to the server a response message of receiving the location update message.

Step 509: The server forwards the response message to the visited MSC.

Corresponding to the embodiments of the method for shielding a call forwarding function according to the present invention, it is also provided in the present invention an embodiment of a system for shielding a call forwarding function.

A block diagram of an embodiment of a system for shielding a call forwarding function according to the present invention is as illustrated in Fig.6. The system includes: a subscriber home network 610, a server 620 and a subscriber visited network 630.

Specifically, the subscriber home network 610 is adapted to send subscriber information to the subscriber visited network 630; the server 620 is adapted to obtain the subscriber information transmitted between the subscriber home network 610 and the subscriber visited network 620, analyze the subscriber information, and send, according to an analysis result, subscriber information not containing forwarding information to the subscriber visited network 630; the subscriber visited network 630 is adapted to receive the subscriber information not containing forwarding information.

Further, the server 620 is adapted to receive a response message returned from the subscriber visited network 630.

Corresponding to the embodiments of the method and system for shielding a call forwarding function according to the present invention, it is also provided in the present invention embodiments of a server.

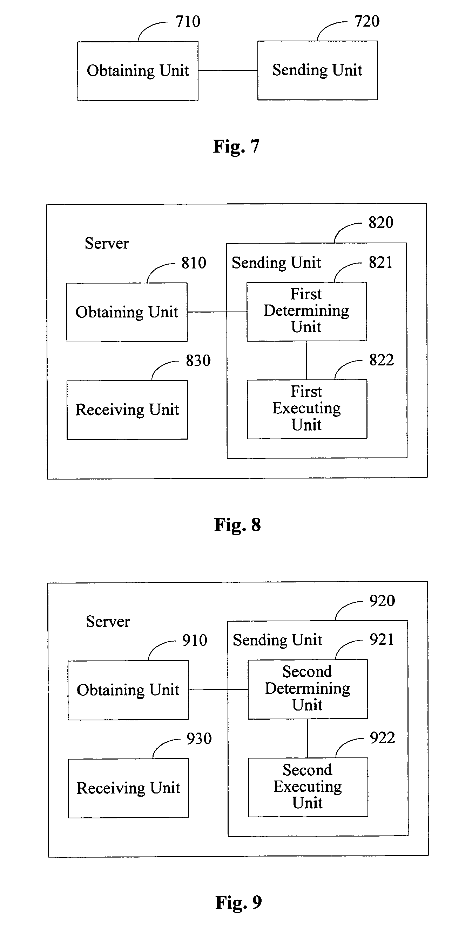

A block diagram of an embodiment of a server according to the present invention is as illustrated in Fig.7. The server includes: an obtaining unit 710 and a sending unit 720.

Specifically, the obtaining unit 710 is adapted to obtain subscriber information transmitted between a subscriber home network and a subscriber visited network; and the sending unit 720 is adapted to analyze the subscriber information, and send, according to an analysis result, subscriber information not containing forwarding information to the subscriber visited network.

A block diagram of another embodiment of a server according to the present invention is as illustrated in Fig.8. The server includes: an obtaining unit 810, adapted to obtain subscriber information transmitted between a subscriber home network and a subscriber visited network; a sending unit 820, adapted to analyze the subscriber information, and send, according to an analysis result, subscriber information not containing forwarding information to the subscriber visited network; and a receiving unit 830, adapted to receive a response message returned from the subscriber visited network.

Specifically, the obtaining unit 810 is adapted to obtain the subscriber information by monitoring a signaling message transmitted between the subscriber home network and the subscriber visited network. The sending unit 820 includes a first determining unit 821, adapted to determine whether the subscriber information contains forwarding information; and a first executing unit 822, adapted to send regenerated subscriber information not containing forwarding information to the subscriber visited network if forwarding information is contained in the subscriber information.

A block diagram of yet another embodiment of a server according to the present invention is as illustrated in Fig.9. The server includes: an obtaining unit 910, adapted to obtain subscriber information transmitted between a subscriber home network and a subscriber visited network; a sending unit 920, adapted to analyze the subscriber information, and send, according to an analysis result, subscriber information not containing forwarding information to the subscriber visited network; and a receiving unit 930, adapted to receive a response message returned from the subscriber visited network.

Specifically, the obtaining unit 910 is adapted to obtain the subscriber information by forwarding a signaling message transmitted between the subscriber home network and the subscriber visited network. The sending unit 920 includes a second determining unit 921, adapted to determine whether the subscriber information contains forwarding information; and a second executing unit 922, adapted to forward forwarding-information-deleted subscriber information to the subscriber visited network or forward regenerated subscriber information not containing forwarding information to the subscriber visited network if forwarding information is contained in the subscriber information.

Those ordinarily skilled in the art can understand that all or part of the steps in the above embodiments of the method can be implemented by program instructing relevant hardware, and the program can be stored in one or more computer readable storage medium. When the program is executed, the execution includes the following steps: obtaining subscriber information transmitted between a subscriber home network and a subscriber visited network; and analyzing the subscriber information, and sending, according to an analysis result, to the subscriber visited network subscriber information not containing forwarding information. The storage medium includes an ROM/RAM, a magnetic disk, an optical disk and the like.

Although the invention has been described with reference to the embodiments, those ordinarily skilled in the art shall understand that various variations and modifications can be made to the present invention without departing from the scope of the invention, and the appended claims is intended to contain these variations and modifications without departing from the scope of the invention.

## Claims

1. A method for shielding a call forwarding function, comprising:
obtaining subscriber information transmitted between a subscriber home network and a subscriber visited network; and
analyzing the subscriber information, and sending, according to an analysis result, forwarding-information-shielded subscriber information to the subscriber visited network.

2. The method according to claim 1, wherein the process of obtaining subscriber information transmitted between a subscriber home network and a subscriber visited network comprises:
obtaining the subscriber information by monitoring a signaling message transmitted between the subscriber home network and the subscriber visited network; or
obtaining the subscriber information by forwarding a signaling message transmitted between the subscriber home network and the subscriber visited network.

3. The method according to claim 2, wherein when obtaining the subscriber information by monitoring the signaling message, the process of analyzing the subscriber information, and sending, according to an analysis result, forwarding-information-shielded subscriber information to the subscriber visited network comprises:
determining whether the subscriber information contains forwarding information; and
sending regenerated subscriber information not containing forwarding information to the subscriber visited network if forwarding information is contained in the subscriber information.

4. The method according to claim 2, wherein when obtaining the subscriber information by forwarding the signaling message, the process of analyzing the subscriber information, and sending, according to an analysis result, forwarding-information-shielded subscriber information to the subscriber visited network comprises:
determining whether the subscriber information contains forwarding information; and
forwarding forwarding-information-deleted subscriber information to the subscriber visited network or forwarding regenerated subscriber information not containing forwarding information to the subscriber visited network if forwarding information is contained in the subscriber information.

5. The method according to any one of claims 1 to 4, wherein the subscriber information transmitted between the subscriber home network and the subscriber visited network is contained in a signaling message transmitted via an Insert Subscriber Data, ISD, signaling interface; and the forwarding-information-shielded subscriber information is contained in a signaling message transmitted via an ISD signaling interface, or in a signaling message transmitted via other Mobile Application Part, MAP, signaling interface, or in a signaling message transmitted via a self-defined internal interface.

6. A server, comprising:
an obtaining unit, adapted to obtain subscriber information transmitted between a subscriber home network and a subscriber visited network; and
a sending unit, adapted to analyze the subscriber information, and send, according to an analysis result, forwarding-information-shielded subscriber information to the subscriber visited network.

7. The server according to claim 6, wherein the obtaining unit is adapted to obtain the subscriber information by monitoring a signaling message transmitted between the subscriber home network and the subscriber visited network.

8. The server according to claim 7, wherein the sending unit comprises:
a first determining unit, adapted to determine whether the subscriber information contains forwarding information; and
a first executing unit, adapted to send to the subscriber visited network regenerated subscriber information not containing forwarding information if forwarding information is contained.

9. The server according to claim 6, wherein the obtaining unit is adapted to obtain the subscriber information by forwarding a signaling message transmitted between the subscriber home network and the subscriber visited network.

10. The server according to claim 9, wherein the sending unit comprises:
a second determining unit, adapted to determine whether the subscriber information contains forwarding information; and
a second executing unit, adapted to forward forwarding-information-deleted subscriber information to the subscriber visited network or send regenerated subscriber information not containing forwarding information to the subscriber visited network if forwarding information is contained in the subscriber information.

11. A system for shielding a call forwarding function, comprising a server according to any one of claims 6 to 10, and further comprising a subscriber home network and a subscriber visited network, wherein:
the subscriber home network is adapted to transmit subscriber information to the subscriber visited network; and
the subscriber visited network is adapted to receive the subscriber information sent by the server.
